# EUROPEAN PATENT APPLICATION

(11) **EP 1 758 031 A1**
(43) Date of publication of application: **28.02.2007**
(21) Application number: 05018506.5
(22) Date of filing: 25.08.2005
(51) Int. Cl.: G06F 17/21

(54) **Selection and display of user-created documents**

(71) Applicant: Microsoft Corporation, Redmond WA 98052 (US)
(72) Inventor: WOOD, Kenneth R Microsoft Research Ltd.,, JJ Thompson Avenue, Cambridge CB30FB (GB); HSIEH, Gary Microsoft Research Ltd.,, JJ Thompson Avenue, Cambridge CB30FB (GB); MEYERS, Brian Microsoft Research Ltd.,, JJ Thompson Avenue, Cambridge CB30FB (GB)
(74) Representative: Free, Rachel Alder

(57) **Abstract**

The invention relates to methods and apparatus for displaying documents created by a particular user to that user. A source of documents created electronically by the user is accessed and an automatic selection of a plurality of parts of documents is made according to selection criteria. The selected parts are displayed sequentially on a peripheral display means associated with the user.

## Description

### TECHNICAL FIELD

This description relates generally to methods and apparatus for selection and display of user-created documents on a peripheral display means.

### BACKGROUND

Peripheral display systems are being developed to provide a user with awareness of information in an unobtrusive manner. The aim of these displays is to provide information in a way that can be easily absorbed by the user but without distracting them from the main focus of their work. Such displays are generally separate from the main computer screen, although they may alternatively occupy an area at the periphery of the main screen, out of the main focus area. The information is generally displayed in a simplified representation so as not to overload the user with detail.

Existing peripheral display systems include the Kimura Project and InfoCanvas developed at the Georgia Institute of Technology. The Kimura Project involves the projection of images on to an office wall. The images are clusters of documents relating to a particular activity and are intended to aid multi-tasking by providing a reminder of past actions and the status of external influences. InfoCanvas involves a more abstract representation of information. The information is displayed as part of a picture where the particular items in the picture or the colour of items represent pieces of information that a user knows how to interpret.

Another example of a peripheral display system is the SideShow interface developed by Microsoft Corporation. SideShow comprises a bar of items down the side of the computer screen, each item displaying a small summary of information, such as a static image from a local traffic camera, an image showing the weather forecast or status information from application programs such as Microsoft Outlook®.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

A first aspect provides a method of displaying documents comprising the steps of: accessing a source of documents created electronically by a user; automatically selecting a plurality of parts of documents from the source according to selection criteria; and sequentially displaying the plurality of parts of documents on a peripheral display means associated with the user.

Preferably the selection criteria includes at least one of: the date of creation of a document; time of creation of a document; mark-up in a document; properties of a document; document type; pre-defined tags and a hierarchy of keywords.

Preferably the documents created electronically by the user are handwritten in electronic ink.

Preferably the step of automatically selecting a plurality of parts of documents from the source comprises the steps of: identifying a candidate set of parts of documents; applying a weighting to each part in the candidate set; selecting a part from the candidate set according to the weighting; and repeating the step of selecting a part from the candidate set.

Preferably the selection criteria includes a degree of substantially random selection.

Preferably the method further comprises the steps of: receiving an input from the user; and changing the degree of substantially random selection according to the input received from the user.

Preferably the method further comprises the steps of analysing activities of the user; and adapting the selection criteria in response to the analysis of activities of the user.

Preferably the method further comprises the steps of: receiving an input from the user; and changing the display properties in response to the input from the user.

Preferably the method further comprises the steps of: receiving an input from the user; and adapting the selection criteria in response to the input of the user.

A second aspect provides one or more device-readable media with device-executable instructions for performing the method described above.

A third aspect provides a apparatus arranged to display documents comprising: an input from a source of documents created electronically by a user (101); means for automatically selecting a plurality of parts of documents from the source according to selection criteria (102); and an output arranged to sequentially transmit the plurality of parts of documents to a peripheral display means associated with the user (103).

Preferably the apparatus further comprises the peripheral display means.

This acknowledges that software and firmware can be valuable, separately tradable commodities. The term 'software' is intended to encompass software, which runs on or controls "dumb" or standard hardware, to carry out the desired functions. For similar reasons, it is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of an apparatus for selecting and displaying user-created documents back to the user that created the documents;
FIG. 2 is an example flow diagram showing the operation of the apparatus of FIG. 1;
FIG. 3 is second schematic diagram of an apparatus for selecting and displaying user-created documents back to the user that created the documents;
FIG. 4 shows an example document that is an electronic note; FIG. 5 shows an example of a hierarchy; and
FIG. 6 is a representation of the display of a peripheral display means.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilised. The description sets forth the functions of the example and the sequence of steps for constructing and operating the example. However, the same or equivalent functions and sequences may be accomplished by different examples.

Traditionally a person in a meeting or on a telephone call etc has taken notes using a pen and paper. These notes then often end up on their desk where seeing the note may remind them of something that was raised in the meeting / call or of an outstanding action which needed to be completed. With the advent of Tablet PCs, users can take notes using a stylus on a touchscreen and therefore a large number of notes in electronic ink can be created and stored on the PC. A user may then have no reason to open a particular notes file again and so the user may never be reminded of an idea that they thought of during the meeting and jotted in their notes.

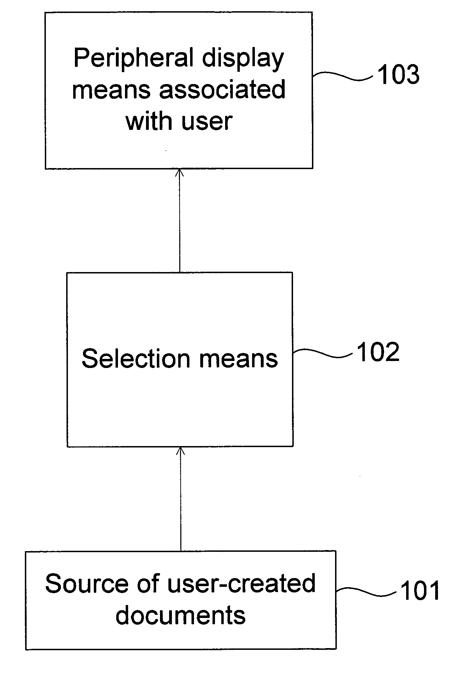

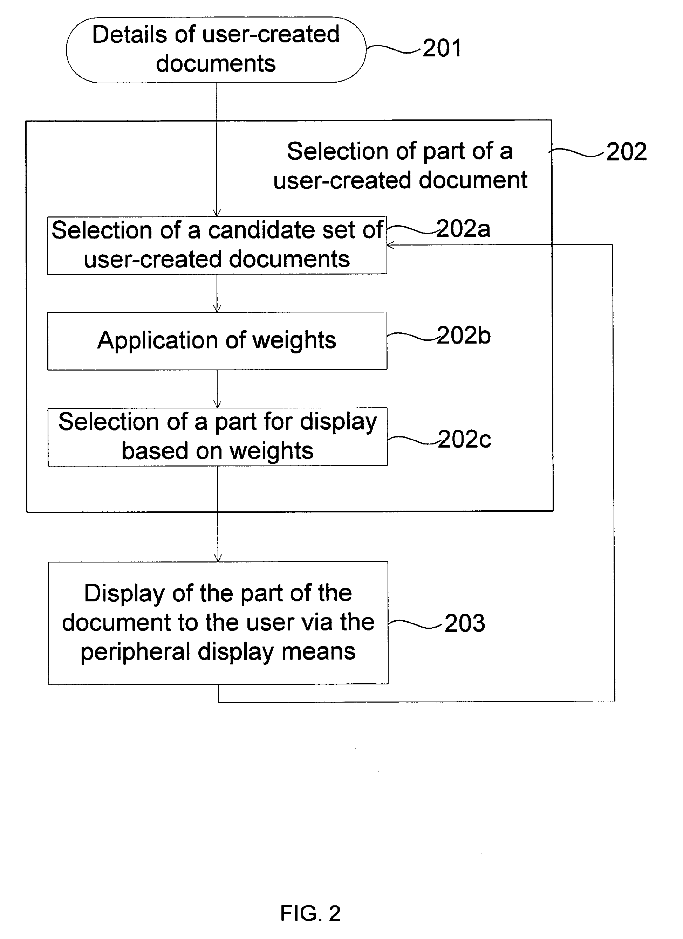

FIG. 1 is a schematic diagram of an apparatus for selecting and displaying user-created documents back to the user that created the documents and FIG. 2 is an example flow diagram showing the operation of the apparatus of FIG. 1.

The term 'user-created' is used herein to describe anything which is created, written, drawn, typed, constructed or collated by the user irrespective of the form in which the document is stored.

The term 'document' is used herein to describe any file, spreadsheet, email, note, task, web page etc irrespective of the form in which the document is stored.

The apparatus comprises an input from a source of user-created documents 101, a selection means 102 and an output to a peripheral display means associated with the user 103.

The selection means 102 accesses the source 101 and receives information on the user-created documents in the source (step 201). It then selects part of one of the user-created documents for display according to selection criteria (step 202). The part of the document selected may be a keyword, a phrase, a paragraph, a doodle, or any other part of the document and may comprise the whole document. The selected part of the user-created document is then displayed to the user who created the document (step 203) via a peripheral display means associated with the user 103. Another part of a document (which may be from the same or a different document) is then selected (step 202) and displayed (step 203) and the loop is repeated, such that many selected parts of documents created by the user are displayed on the peripheral display means 103. The selected parts may be displayed one at a time or two or more parts may be displayed simultaneously. As new parts are displayed, older parts are optionally removed to make space for the newly selected parts. The selection step 202 is described in more detail below.

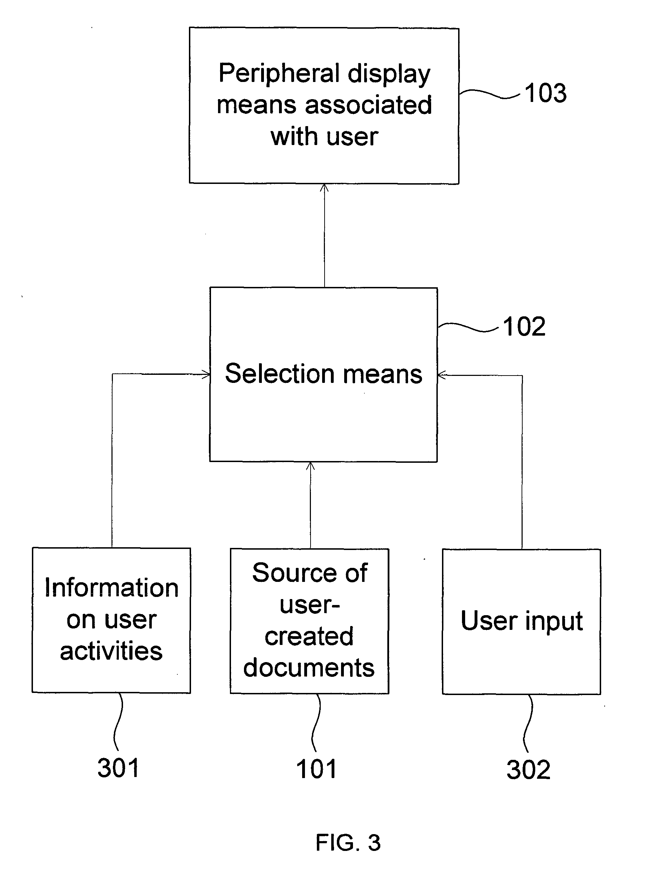

By using a peripheral display means 103, the documents are displayed in an unobtrusive manner such that the user is not distracted from the main focus of their work. However, the user will be peripherally aware of the parts of documents being displayed and these may remind the user of required actions, good ideas etc. Although it is the intention that by using a peripheral display means the documents are displayed in an unobtrusive manner, the user may also choose to pay full attention to a document part showed on the peripheral display if it is of particular interest to the user. This is described in more detail in the description below with reference to FIG. 3 along with discussion of some actions that the user may take if they are interested in a part of a document that is displayed.

As the user is being shown documents that they themselves created, it may not be necessary for them to read the documents to gain these reminders, because keywords, doodles, titles etc may remind them of the context in which the document was created and that may be sufficient.

The source of user-created documents 101 is a collection of documents, created by a user which may be stored together on, for example, a drive on a computer or a network drive or may be stored in a distributed manner across networks and computers. The user-created documents may be any documents that have been created by the user including, but not limited to, electronic ink notes (e.g. Microsoft^{®} Ink format used in programs such as Windows^{®} Journal and Office OneNote^{®}), text files (e.g. Microsoft^{®} Word documents), spreadsheets (e.g. Microsoft^{®} Excel files), presentations (e.g. Microsoft^{®} PowerPoint^{®} files), emails, contacts (e.g. Microsoft^{®} Outlook^{®} Contacts), sketches, diagrams and tasks.

The peripheral display means 103 is associated with the user that created the documents being displayed. The peripheral display means 103 may comprise a peripheral display, an area at the periphery of the user's main screen, a user's second screen or a screensaver-type application that runs when the user is not actively using their computer. The peripheral display may be a peripheral screen located on a wall near the user's desk, it may form part of the user's desk surface or it may comprise a projection on a suitable surface (e.g. wall, desk). The peripheral display may alternatively be the display on another apparatus such as a PDA (Personal Digital Assistant), laptop, tablet or mobile phone. In another example, the peripheral display could be a special display device such as a globe or cylinder shaped object where the part of the document is projected on to the external surface from inside the object. Furthermore, the peripheral display need not be located in the user's work place but may be moveable (such as the PDA, laptop etc detailed above) or located in the user's home (e.g. in their home office or study). The peripheral display means 103 may also comprise multiple displays e.g. a peripheral display in the office and a screensaver-type display on the user's laptop or multiple projections on to surfaces within an office.

The selection means 102, which may be a processor, comprises means for automatically selecting a number of parts of user-created document from the source 101 according to specified selection criteria (each selected part will usually be different from the previous selected part). The specified selection criteria may be fixed or may vary dynamically or be adaptive (as described in more detail below).
The user may be able to set or influence the selection process, as described in more detail below with reference to FIG. 3.

An example of the selection process is shown in FIG. 2 and in which a candidate set of documents or parts thereof, which may be some or all of those in the source 101, is determined using selection criteria (step 202a). A weighting (i.e. a probability of selection) is then applied to documents or parts thereof within the candidate set based on selection criteria (step 202b) and a part of a document is selected for display using the weighting (step 202c).

The selection criteria may include one or more of the following:
- Date and time of creation / last edit of the document
- Mark-up in the text, e.g. highlighting, ink colour, asterisks, marks in the margin, underlining, use of block capitals, doodles
- Location where the document was created, e.g. GPS location, IP address
- Properties of the text, e.g. keywords, key phrases, URLs, action words
- Aspects of the way the notes were written, e.g. speed, pressure, overwriting
- Types of documents
- Predefined tags, flags or symbols

Further examples are described below with reference to other embodiments.

In order to perform the selection, the user-created documents are analysed according to the selection criteria. Where the documents in question are notes in electronic ink, such that they are in the user's handwriting rather than typed documents, the analysis may require processing of the handwriting such as handwriting recognition.

In an example, a user may specify that only documents created in the last month should be displayed (these then form the candidate set) and that documents should be weighted such that documents with mark-up in the text are favoured (i.e. have a higher weighting than those without). Additionally, the user may specify that paragraphs within a specified proximity to doodles are also given higher weighting.

In a second example, a user may specify that documents with the keywords 'peripheral display' are given increased weighting.

The selection process may also include a substantially random element such that any document within the source of user-created documents 101 has a finite probability of selection. The degree of random selection may be fixed or variable and may be set by the user. Any suitable pseudo-random algorithm may be used as is known in the art. Use of a substantially random element to the selection has an advantage that documents that might otherwise never be displayed have a chance of being displayed to the user. Any suitable weighting scheme as is known in the art, from simple linear combination to more complex non-linear schemes based on statistical inference, may be used to combine the random and non-random factors.

The selection means 102 may also determine the way that the document is displayed, such as size, colour and for how long a selected part of a document is displayed (if this is not a fixed value). The weighting assigned to a document may affect the way that the document is displayed and may affect the length of time that a document is displayed for, with for example a higher weighted part of a document being displayed for longer than a lower weighted part of a document, or a higher weighted part being displayed in larger text, or a brighter colour than a lower weighted part.

The selection means 102 may also determine the type of transition used between different parts of documents being displayed (if this is not fixed). Examples of possible transitions include the slide transitions offered in Microsoft® PowerPoint® including and not limited to fade, blinds, box, checkerboard, cover, cut and wipe. In addition to these transactions, the document parts may be independently panned and/or zoomed. For example while a document is visible it may move around the screen and/or change in size whilst displayed. The colour or brightness with which a part of a document is displayed may also vary whilst the part is being displayed.

A second embodiment is shown in FIG. 3 which is another schematic diagram of an apparatus for selecting and displaying user-created documents back to the user that created the documents. FIG. 3 shows the arrangement of FIG. 1 with the addition of two inputs to the selection means 102. The additional inputs are information on activities of the user 301 and input from the user 302. Although both additional inputs are shown in FIG. 3 an apparatus could comprise either input 301, 302 without the requirement for the presence of the other.

The information on the activities of the user 301 enables the selection means 102 to analyse these activities and adapt the selection criteria to reflect the activities. The information on user activities 301 may comprise details of recently saved / edited documents or recently sent emails and in this case there may be overlap between the information on the activities of the user 301 and the source of user-created documents 101. The information may comprise information on recent emails received, recent documents read (but not necessarily saved / edited), recent web pages accessed, recent web searches etc, and in this case there may be no overlap between the information on the activities of the user 301 and the source of user-created documents 101. In another example, the information 301 may comprise information on recent emails sent or received, in which case there may be some overlap between the information on the activities of the user 301 and the source of user-created documents 101.

The adaptation of the selection criteria on the basis of user activities may be performed periodically or may be a substantially continuous process so that it can react to changes in the user's activity during a day or from day to day.

For example, if the user is currently working on a document entitled 'Peripheral Displays', documents or parts thereof with the words 'peripheral' and 'display' could be given a higher weighting, or alternatively only documents containing these words could be selected to form part of the candidate set for display.

In another example, if the user has recently sent or received several emails including the word 'conference', the selection criteria could give a higher weighting to parts of documents including the keyword 'conference'.

The user input 302 enables the user to influence the selection process and/or the display process. The user input may be via a keyboard, mouse, touchscreen or any other means. If the peripheral display means 103 is touch sensitive (e.g. a touchscreen or intelligent whiteboard) the input may be provided by touching the peripheral display means 103.

As described above, the user may be able to influence the way in which the documents or parts thereof are displayed, such as font, size and colour. The user could also indicate, in response to seeing a part of a document, that they would like to view the part or the whole of the document in question, either on the peripheral display means 103 or on their main display. If the document is transferred from the peripheral to the main display, the peripheral display may continue to show other selected parts of documents whilst the user reviews the transferred document on their main display.

The input 302 could also be used by the user to pause the display means to give them extra time to read the part of the document displayed. The paused part of the document could be displayed on either the peripheral display or the main display. The part may be paused for a fixed period or until the user indicates that the pause should finish. However, as the display is intended to be unobtrusive, the user may not realise that they have seen an item of interest until after the display has changed. The user input 302 may therefore allow the user to 'rewind' the display and display documents that were shown previously.

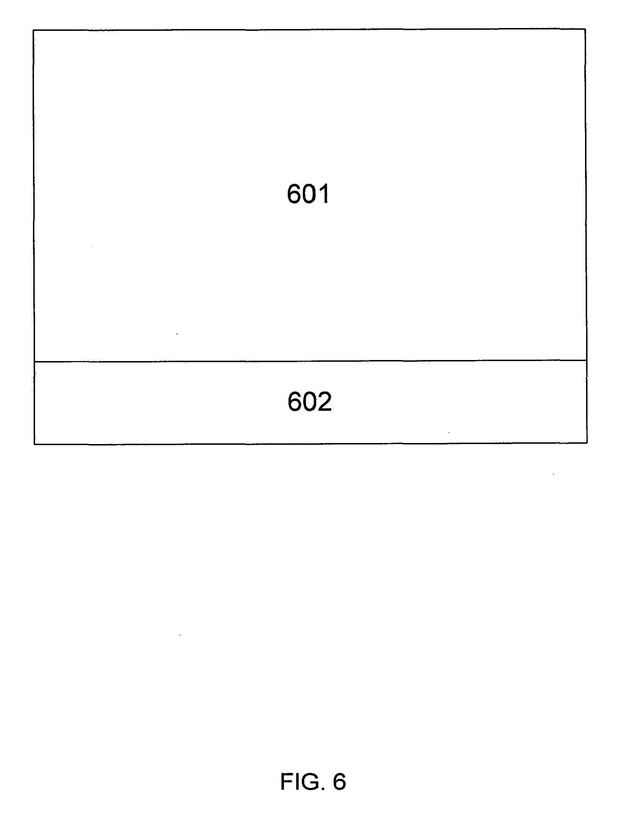

As described above, the user may also be able to influence the selection criteria such as specifying the degree of substantially random selection in the selection process or setting a range of dates for use in selecting documents. The specification of the degree of substantially random selection may be by way of a "slider" or other variable mechanism that the user can adjust whilst the system is running. At one extreme setting of the sliding scale the document parts would be selected entirely randomly whilst at the other extreme the documents would be chosen entirely based on context. By placing the slider in between the two extremes there would be some combination of substantially random selection and selection based on context. The user may be able to influence the selection criteria, e.g. set the slider position, by way of a menu screen which could be viewed on either the main or the peripheral display. Alternatively, the selection criteria setting menu may be on display in a portion of a display (e.g. peripheral display as described below with reference to FIG. 6).

The user input 302 may also enable the user to indicate a level of interest in the documents being displayed. For example, if the user noticed a part of a document which they thought was interesting, they could indicate this and then the selection criteria could be dynamically modified such that similar documents were displayed. The selection means 102 may then use machine learning techniques to adapt the selection criteria in response to the inputs received from the user. Suitable machine learning techniques include Neural Networks, Support Vector Machines and other kernel based learning methods. Details of some suitable techniques are described at
http://research.microsoft.com/~horvitz/seer.htm and
http://research.microsoft.com/~jplatt/svm.htm.

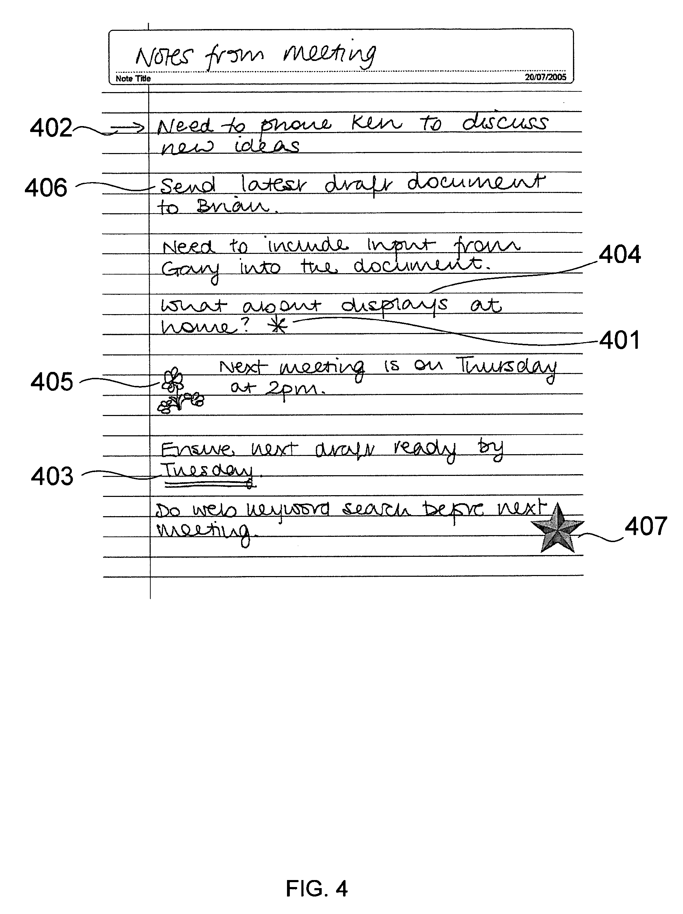

FIG. 4 shows an example document that is an electronic note. The document shows some of the features which may be part of the selection criteria (as detailed above) including mark-up in the text such as asterisks 401, marks in the margin 402, underlining 403, keywords 404 and doodles 405.

FIG. 4 also shows an action word 'Send' 406. According to the selection criteria, parts of documents with action words may be given high weights so as to remind the user of the required action. The user may be able to cancel this effect by touching the display whilst the part of the document is being displayed to indicate that the action has been completed and the part of the document does not now require a high weight. The selection process may also be configured such that the transitions to documents with action words in them are more obtrusive than the normal transition between documents, so that these documents are more likely to be noticed by the user. The selection means 102 may also be configured to add tasks to the user's task list when it identifies action words in the documents.

FIG. 4 additionally shows a flag 407. Such flags are given a predefined meaning and are inserted by the user intentionally to influence the operation of the selection process. Example flags include a high weighting flag and a reminder flag (which may include the date / time requirements for display). The flags may also cause tasks to be added to a task list.

The selection criteria may also be based on a hierarchy of concepts or keywords which is automatically constructed from analysis of the user activities (from the information 301), analysis of the user-created documents in the source 101 or from analysis of another document source. Examples of hierarchy construction techniques are described in 'Discovering and Comparing Topic Hierarchies' by D. Lawrie and W. B. Croft (http://citeseer.ist.psu.edu/458733.html).

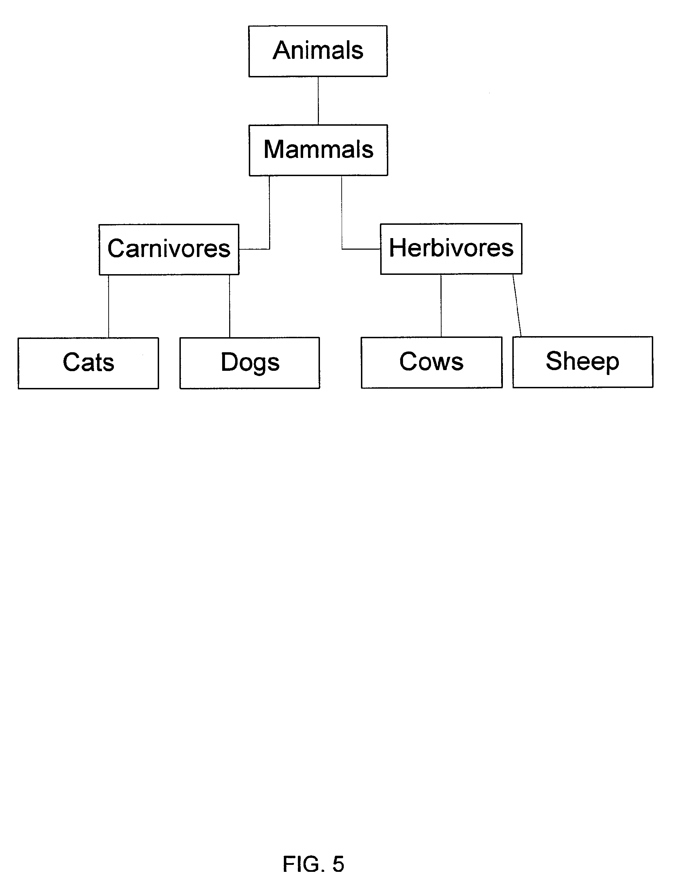

An example hierarchy is shown in FIG. 5. This is a single hierarchy where there is a tree-like structure. Alternatively, the hierarchy could be multifaceted, for example there could be another dimension to the hierarchy of FIG. 5 containing continents and countries, such that a document about dogs in France could be identified by the keyword 'dog' in the first dimension and 'France' in the second dimension.

In the situation where the user-created documents have been analysed to form a hierarchy, input from the user 302 can be used to navigate through the hierarchy by requesting child documents or moving up / down in the hierarchy. In this case, the peripheral display means 103 may have two sections to its display, as shown in FIG. 6. The main section 601 is used to display the selected part of a document, whilst the second section 602 is used to display the hierarchy and where the document currently being shown fits within that hierarchy. In this way, a user can easily determine whether they wish to move up / down in the hierarchy. Use of a multifaceted hierarchy, as described above, makes it simpler for users to locate documents of interest in the same way that using multiple keywords in a web search narrows the search down. FIG. 6 shows the second section 602 as being much smaller than the main section 601. The relative sizes of the sections may depend on what information is to be displayed in each section.

A two part peripheral display, as shown in FIG. 6 may also be useful for displaying other information in the second section 602. For example it could display a time line and indicate the position of the document being displayed on the time line. This would provide the user with a quick visual indication of the age of the document being displayed. The user could also interact with the time line to influence the selection criteria. In another example, the smaller section could detail the keywords that have been identified in the user-created documents in the source 101, enabling the user to indicate quickly and easily which keywords were of particular interest which would result in an adaptation of the selection criteria. In another example, the second section 602 could display context information relating to the part of the document being displayed, such as the date, time and location of creation.

In another example, the second portion of the screen could display the current selection criteria settings and/or the slider mechanism described above. This would enable the user to easily change selection criteria when required.

In another example, a two part peripheral display as shown in FIG. 6 or a multi-part display may be used to show multiple sets of displayed document parts. For example with the display shown in FIG. 6 the main section 601 may be used to show a set of documents substantially randomly chosen from the candidate set and the second section of the display 602 could be used to display documents selected based on user context. Alternatively the different sets of displayed document parts could come from different candidate sets, different user contexts, different document types or any other different selection criteria. It will be apparent to a skilled person that the different sections within a two-part or multi-part display may be of the same or different sizes and aspect ratios.

In another example using a two-part peripheral display as shown in FIG. 6, the main section 601 is used to display the repeatedly selected parts of documents whilst the second section 602 is used to display static notes. These notes may be parts of documents which have been displayed on the main section and which the user has indicated by the user input 302 are of particular interest. For example, a user may spot something interesting in the main display 601 but does not wish to deal with it at that moment. They can then drag the part of the document into the second section of the screen 602 and refer back to it at a later more convenient time. In addition or instead of these paused parts of documents in the smaller section, the second section 602 may display other notes and reminders created by the user. For example the user input 302 may be a tablet, PDA, special user input tablet (e.g. miniature tablet) or other device enabling the user to scribble or type quick notes. These could then be displayed in the second section of the display 602 so as to provide a personal bulletin board area for the user. Alternatively the display 602 could show notes created in other applications, such as the Notes capability in Microsoft^{®} Outlook^{®}.

By using a multi-part display as described above, the apparatus as described above and shown in FIGS. 3 and 6 may be used as a brainstorming tool. By displaying various different parts of documents and user generated notes simultaneously or in succession, different interesting connections between the notes and documents may be created, which may spark new ideas for the user.

As described above, some or each section in a one-section, two-section or multi-section display may be used to show parts of documents which have been selected. Each section may show one or more parts of a document at any one time, with the parts shown in one or more sections changing with time, as newly selected parts replace earlier selected parts of documents on display.

Although the multi-section display is described above as being different areas on a single peripheral display means, the peripheral display means can compromise more than one display. The sections of the multi-section display may be split across more than one display or each section may be a separate display.

Any range or device value given herein may be extended or altered without losing the effect sought, as will be apparent to the skilled person.

It will be apparent to a suited person that the order of the method steps described above is just one possible example order. Some or all steps may be performed in a different order and/or substantially simultaneously, without losing the effect sought.

It will be understood that the above description of a preferred embodiment is given by way of example only and that various modifications may be made by those skilled in the art.

## Claims

1. A method of displaying documents comprising the steps of:
accessing a source of documents created electronically by a user (201);
automatically selecting a plurality of parts of documents from the source according to selection criteria (202); and
sequentially displaying the plurality of parts of documents on a peripheral display means associated with the user (203).

2. A method according to claim 1, wherein the selection criteria include at least one of:
date of creation of a document; time of creation of a document; mark-up in a document; properties of a document; document type; pre-defined tags and a hierarchy of keywords.

3. A method according to claim 1 or 2, wherein the documents created electronically by the user are handwritten in electronic ink.

4. A method according to any of claims 1-3, wherein the step of automatically selecting a plurality of parts of documents from the source (202) comprises the steps of:
identifying a candidate set of parts of documents (202a);
applying a weighting to each part in the candidate set (202b);
selecting a part from the candidate set according to the weighting (202c); and
repeating the step of selecting a part from the candidate set.

5. A method according to any of claims 1-4, wherein the selection criteria includes a degree of substantially random selection.

6. A method according to claim 5 further comprising the steps of:
receiving an input from the user; and
changing the degree of substantially random selection according to the input received from the user.

7. A method according to any of claims 1-6 further comprising the steps of:
analysing activities of the user; and
adapting the selection criteria in response to the analysis of activities of the user.

8. A method according to any of claims 1-7 further comprising the steps of:
receiving an input from the user; and
changing the display properties in response to the input from the user.

9. A method according to any of claims 1-8 further comprising the steps of:
receiving an input from the user; and
adapting the selection criteria in response to the input of the user.

10. One or more device-readable media with device-executable instructions for performing steps comprising:
accessing a source of documents created electronically by a user (201);
automatically selecting a plurality of parts of documents from the source according to selection criteria (202); and
sequentially displaying the plurality of parts of documents on a peripheral display associated with the user (203).

11. One or more device readable media according to claim 10, wherein the selection criteria include at least one of:
date of creation of a document; time of creation of a document; mark-up in a document; properties of a document; document type; pre-defined tags and a hierarchy of keywords.

12. One or more device readable media according to claim 10 or 11, wherein the documents created electronically by the user are handwritten in electronic ink.

13. One or more device readable media according to any of claims 10-12, wherein the step of automatically selecting a plurality of parts of documents from the source (202) comprises the steps of:
identifying a candidate set of parts of documents (202a);
applying a weighting to each part in the candidate set (202b);
selecting a part from the candidate set according to the weighting (202c); and
repeating the step of selecting a part from the candidate set.

14. One or more device readable media according to any of claims 10-13, wherein the selection criteria includes a degree of substantially random selection.

15. One or more device readable media according to claim 14, further comprising the steps of:
receiving an input from the user; and
changing the degree of substantially random selection according to the input received from the user.

16. One or more device readable media according to any of claims 10-15, further comprising the steps of:
analysing activities of the user; and
adapting the selection criteria in response to the analysis of activities of the user.

17. One or more device readable media according to any of claims 10-16, further comprising the steps of:
receiving an input from the user; and
changing the display properties in response to the input from the user.

18. One or more device readable media according to any of claims 10-17, further comprising the steps of:
receiving an input from the user; and
adapting the selection criteria in response to the input of the user.

19. An apparatus arranged to display documents, comprising:
an input from a source of documents created electronically by a user (101);
means for automatically selecting a plurality of parts of documents from the source according to selection criteria (102); and
an output arranged to sequentially transmit the plurality of parts of documents to a peripheral display means associated with the user (103).

20. An apparatus according to claim 19, further comprising the peripheral display means.
